# EUROPEAN PATENT SPECIFICATION

(11) **EP 0 325 475 B1**
(45) Date of publication and mention of the grant of the patent: **31.03.1993**
(21) Application number: 89300537.1
(22) Date of filing: 20.01.1989
(51) Int. Cl.: D02G 3/48, B60C 9/00

(54) **Composite cord for reinforcing rubber**
Zusammengesetzter Cordfaden zum Verstärken von Kautschuk
Cordon composite pour le renforcement du caoutchouc

(30) Priority: 20.01.1988 JP 6117/88; 23.12.1988 JP 167069/88
(43) Date of publication of application: 26.07.1989
(73) Proprietor: SUMITOMO ELECTRIC INDUSTRIES LIMITED, Osaka-shi, Osaka 541 (JP)
(72) Inventor: Nakata, Hidekazu, 1-1, Koyakita 1-chome Itami-shi Hyogo (JP); Nagamine, Akira, 1-1, Koyakita 1-chome Itami-shi Hyogo (JP); Okamoto, Kenichi, 1-1, Koyakita 1-chome Itami-shi Hyogo (JP)
(74) Representative: Warren, Keith Stanley

(56) References cited:
- EP-A- 0 144 811
- EP-A- 0 225 055
- DE-A- 2 808 136
- DE-A- 3 402 779
- GB-A- 1 264 118
- US-A- 3 631 667
- US-A- 4 333 507
- US-A- 4 343 343

## Description

The present invention relates to a composite cord for reinforcing rubber comprising a central polymeric fibre cord and a high-carbon steel fine wire used therewith being buried in rubber for reinforcing rubber products such as various kinds of tyre for use in vehicles and conveyor belts.

Steel radial tyres with a steel cord, a nylon cord, a polyester cord or the like as a main reinforcing material are widely used in cars or other vehicles for their high-speed durability, driving stability, fuel economy and the like. The steel cord, which has been used in the above mentioned tyres for use in cars, has been produced by stranding many pieces of brass (Cu-Zn) plated fine piano wires which contain 0.65 to 0.85% carbon contents.

These brass plated fine wires whose diameter is 0.1 to 0.4 mm are brass plated at about 1 to 2 mm diameter, then drawn into fine wires. The brass-plated layer of the cord surface is necessary for an adhesion to rubber. In addition, the tensile strength of the steel fine wire is generally 2452 to 3334 N/mm² (250 to 340 kgf/mm²).

On the other hand, for airplanes and motorcycles, characteristics such as superior elastic deformability and flexibility are required, so that the conventional nylon cord and the like have been used but the steel cord and steel filament (fine wire) have never been used.

For example, in the case of the tyres used in airplanes, the nylon cord, which is rich in elastic deformability and has shock-absorbing capacity, has been used to soften the shock at repeated landings. This nylon cord is wound along the under-tread periphery of the tyre so that, when the tyre stamps down on strange objects, such as stones, during the rotation thereof, if they are sharp, they break through a tread rubber and arrive at the nylon cord, whereby the nylon cord is damaged or broken. Accordingly, the improvement of the cut resistance has been required to not only the tyre itself but also the nylon cord. In addition, in case of the motorcycle tyres frequently using the nylon cord and the like for reinforcing a belt in a similar manner, recently there is a tendency that the tyre is large-sized and durable in high-speed, whereby an improvement of the endurance of the tyre and the rigidity of the belt portion have been required in addition to the performances which have been required of this type of tyres.

In order to match the improvement and the change of the performance required of both such tyres, the constituent elements as a composite have to be chosen and combined skillfully or the performances of the constituent elements have to be improved. In view of the latter point, it has been required how to give the cut resistance and the rigidity without losing the original properties of the nylon cord.

Accordingly, the improved rigidity is required in addition to the conventional high-elongation characteristic, but a suitable cord has not been obtained yet.

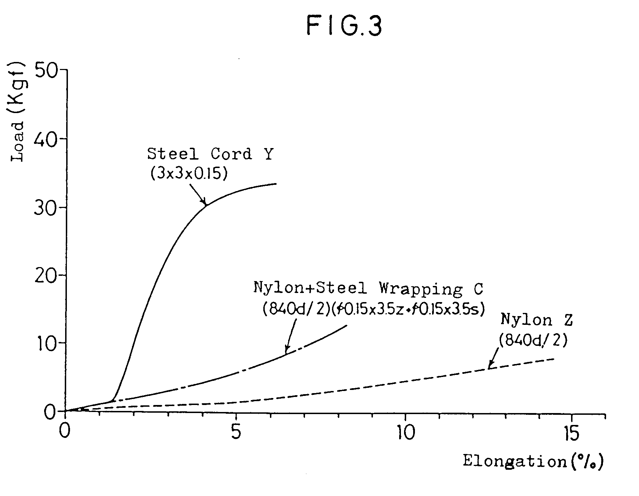

For example, a high-elongation steel-cord [for example 3 x 3 x 0.15 (pitch; 1.78/3.5S)] having these characteristics has been investigated. But it is required that the load-elongation curve for high-elongation steel cord approaches to the one for nylon cord. For instance, the load-elongation curve positioned between steel cord and nylon cord is required. (Fig. 3).

US-A-4,343,343 discloses a composite cord for tyre reinforcement, comprising a core of at least one unoriented polyester or polyamide fibre and two adhesive-treated aramid yarns twisted around the core, in the same direction and at the same pitch.

The present invention consists in a composite cord for reinforcing rubber, comprising a central nylon or polyester fibre cord, subjected to a resorcinol-formalin latex treatment, around which are wound a plurality of metallic filaments, characterised in that the metallic filaments comprise at least two brass-plated steel wires having a carbon content of at least 0.65 wt.% and a diameter of 0.12 to 0.25 mm, wound in opposite directions around the nylon or polyester fibre cord to form first and second layers each with a wrapping pitch in the range from 0.4 to 7 mm, the second layer overlying the first and having a wrapping pitch 1.0 to 5.0 times that of the first layer.

The invention will now be further described by way of example with reference to the accompanying drawings in which :
FIG. 1 is a sectional view showing a construction of the composite cord, in accordance with an embodiment of the present invention;
FIGS. 2, 3 are curves showing the load-elongation relationship of this invented composite cord and that of the conventional cord respectively.

According to the present invention, the central polymeric fibre cord is subjected to the resorcinol-formalin-latex-treatment (hereinafter referred to as RFL treatment) to give adhesion to rubber. The cord is treated by immersing in the resorcinol-formalin-latex solution. The brass plated high-carbon steel fine wire is a steel filament (fine wire) which is a constituent element of the so-called steel tyre cord. The composite cord of the invention has been found to impart cut resistance and rigidity to the polyester or nylon fibre cord without loss of the high-elongation characteristic of the cord.

On the other hand, the steel filament is characterised by a high strength, as above mentioned, but the elongation at break is low (typically 1 to 2%). In order to obtain the high elongation characteristic for a composite cord without spoiling the characteristics of the nylon cord, it is required to increase a real length of the steel filament to a unit length of the composite cord. Furthermore, in order to realise the armoring role, the steel filament was spirally wound (that is, wrapped) around the fibre cord. Although even merely one layer of filament can realise its role by reducing a wrapping pitch to an extent of 0.4 to 7.0 mm, a residual torsion is generated in the composite cord as a result of processing with the steel filament. As a result, this composite cord is apt to be intensely twisted, whereby it cannot be practically used.

The removal of this residual torsion requires the process such as the retwist of the composite cord, so that the operation becomes troublesome and an ill effect is taken upon the product cost.

The present inventors have found that the residual torsion due to the wrapping of the first layer could be compensated by wrapping a second layer of steel filament around the surface of this composite cord in an opposite direction (for example if the former was an "S", the latter was a "Z", and vice versa). In addition, the optimum conditions were investigated and showed that if the wrapping pitch of the second layer was smaller than that of the first layer, then the opposite residual torsion is generated in the cord. By selecting a second wrapping pitch 1.0 to 5.0 times the first wrapping pitch, the need for subsequent retwisting is avoided.

The composite cord according to an embodiment of the present invention is a composite comprising the flexible and extensible polymeric fibre cord and the hard and strong steel filaments. The steel filaments are spirally and continuously wrapped around the fibre cord so that the composite may have the characteristics of both different materials together.

The reason why the diameter of the fine wire is selected at 0.12 to 0.25 mm and the wrapping pitch thereof is selected at 0.4 to 7.0 mm is that since the steel filament is wrapped around the soft fibre cord, if the diameter of the steel filament is increased, the rigidity thereof is increased too much, whereby an unreasonable force is applied to the fibre cord during the wrapping process and at present the smallest diameter of the steel filament, at which it can be practically mass-produced, is 0.12 mm.

In addition, the smaller the wrapping pitch, the more effective the armoring, but the lower limit of the wrapping pitch is 0.4 mm in view of productivity in the wrapping process while the upper limit is 7.0 mm since it does not remarkably spoil the elongation characteristics of the fibre cord. Though the wrapping pitch should be expressed by the wrapping angle, the fibre cord diameter used for tyres is 0.5 to 1.0 mm and does not give a big change to the wrapping angle, so it is expressed in terms of the real length.

The reason why the filament is wrapped with the two layers in opposite directions and the second wrapping pitch is 1.0 to 5.0 times the first is that the residual torsion after second wrapping is zero and retwisting after wrapping is not needed.

However, in the case that the improvement of cut resistance is strongly desired, two or more steel filament wrapping layers can be used but five layers are suitable at most in view of the increased weight.

According to the present invention, the central cord comprises nylon or polyester, which are most frequently used for the tyres for use in vehicles. Composite cords containing rayon and an aramid fibre with different characteristics from rayon may be used. Moreover, these cords are subjected to the resorcinal-formalin-latex (RFL) treatment to improve the adhesion thereof to rubber.

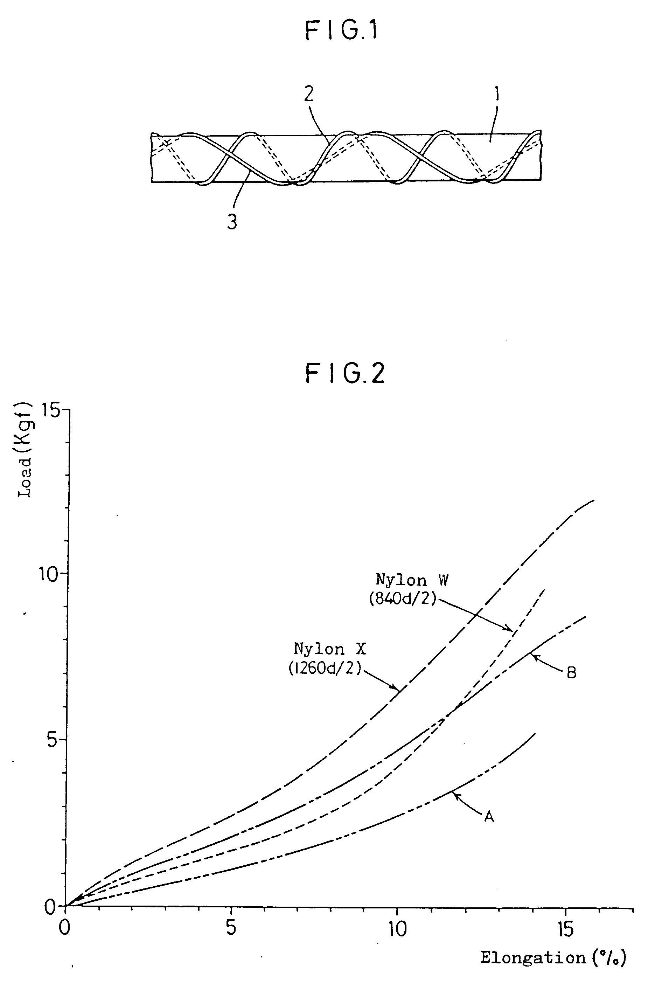

The preferred embodiments of the present invention will be below described with reference to Fig. 1.

### EXAMPLE 1

In Fig. 1, a brass plated steel filament 2 having a diameter of 0.15 mm was wrapped around the nylon cord (840 d/2) 1 subjected to the RFL treatment and its pitch was 0.8 mm and the wrapping direction was "S", then the second filament 3 was wrapped with 1.5 mm pitch and "Z". This is a schematic diagram of the composite cord, in accordance with an embodiment of the invention.

The load-elongation curve of such obtained composite cord and the conventional nylon cord is shown in Fig. 2.

Referring to Fig. 2, a curve A shows the load-elongation curve of above-mentioned composite cord, a curve B shows one of a composite cord comprising a nylon cord (1.260d/2) and a steel filament having a diameter of 0.15 mm wrapped with 0.88Z + 1.39S, a curve W shows one of a nylon cord (840 d/2), and a curve X shows one of a nylon cord (1.260 d/2).

Referring to Fig. 3, a curve C shows a load-elongation curve of the composite cord according to an embodiment of the present invention comprising a nylon cord (840 d/2) and a steel filament having a diameter of 0.15 mm wrapped with 3.5S + 3.5Z. A curve Y showing a steel cord 3 x 3 x 0.15 (1.7s/3.5s)HE for reference, and a curve Z showing a nylon cord for reference, also show a load-elongation curve.

The composite cords A, B according to the present invention shown in Fig. 2 exhibit very little reduction of elongation at break in comparision with the nylon cord. Since the wrapping pitch of the steel filament is small, if the composite cords A, B are used in place of the nylon cord wound in the circumferential direction of the tyre as the belt cord of the tyre for use in airplanes and the tyre for use in ultra-high performance cars, a tyre having a particularly superior cut resistance with the maintenance of high elongation at break and characteristics can be obtained.

In addition, referring to Fig. 3, the characteristics of the composite cord C according to the present invention are positioned midway between the nylon cord Z used for the tyre for use in motorcyles and the 3 x 3 x 0.15 (1.7s/3.5s)HE cord Y. That is to say, the elongation characteristics of the nylon cord is slightly lowered but the nylon cord is remarkably improved in rigidity, whereby having a remarkably good influence in large-size and high-speed applications.

### EXAMPLE 2

A brass plated fine wire (piano wire) having a diameter of 0.15 mm was wrapped around a nylon cord to obtain a composite cord. The strength and elongation at break of this composite cord were measured with the results shown in Table 1 hereinbelow.

In addition, a single nylon cord was shown for comparison.

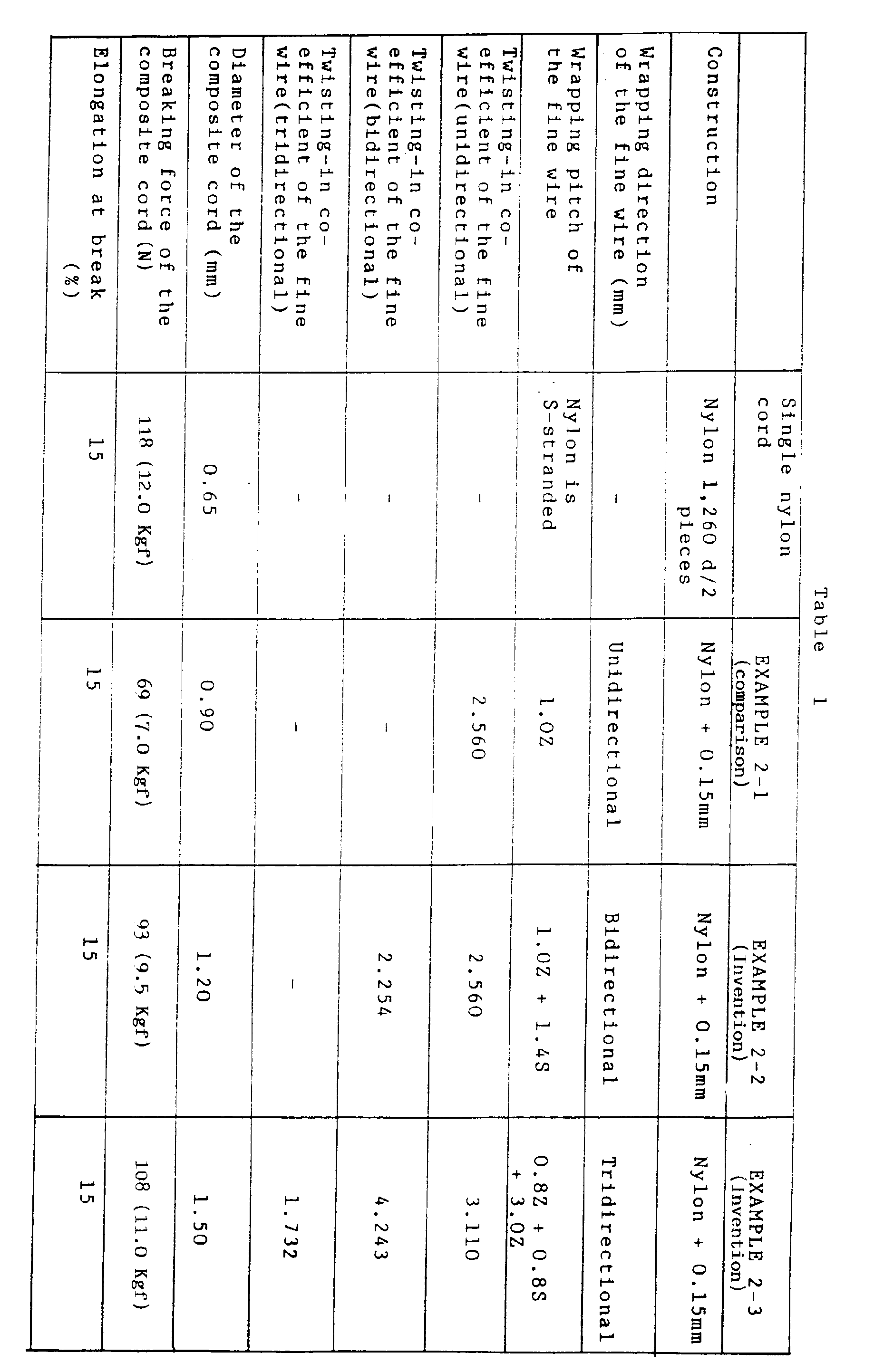

The twisting-in coefficient was calculated by the following equation:
Twisting-in coefficient = $\text{[} \sqrt{\text{(π D′ )² + P²}} \text{]}$ / P
wherein
P = Length of lay (mm)
D′ = Pitch diameter (mm)

It was found from the above Table that the breaking force of the composite cord was lower than that of the single nylon cord but the elongation at break of the composite cord was on the same level as the single nylon cord.

As above described, the cut resistance and rigidity of the tyre can be improved by using the composite cord according to the present invention in various kinds of tyre as the cord for reinforcing rubber in place of the conventional nylon cord and polyester cord, whereby greatly contributing to the improvement of the tyre in performance.

## Claims

1. A composite cord for reinforcing rubber, comprising a central nylon or polyester fibre cord (1), subjected to a resorcinol-formalin-latex treatment, around which are wound a plurality of metallic filaments (2, 3), characterised in that the metallic filaments comprise at least two brass-plated steel wires having a carbon content of at least 0.65 wt.% and a diameter of 0.12 to 0.25 mm, wound in opposite directions around the nylon or polyester fibre cord (1) to form first and second layers each with a wrapping pitch in the range from 0.4 to 7 mm, the second layer (3) overlying the first (2) and having a wrapping pitch 1.0 to 5.0 times that of the first layer.

2. A composite cord as claimed in claim 1, in which the central cord (1) is a nylon cord.

3. A composite cord as claimed in claim 1, in which the central cord (1) is a polyester cord.

4. A composite cord as claimed in any one of claims 1 to 3, in which the brass layer plated on the surface of the high-carbon steel fine wire (2) is formed of one or more alloys based on Cu-Zn.

## Patentansprüche

1. Zusammengesetzter Cordfaden zum Verstärken von Kautschuk, enthaltend einen einer Resorzin-Formalin-Latex-Behandlung unterworfenen zentralen Nylon- oder Polyesterfasercordfaden (1), um den eine Mehrzahl metallischer Fäden (2, 3) gewickelt ist, dadurch gekennzeichnet, daß die metallischen Fäden wenigstens zwei messingüberzogene Stahldrähte mit einem Kohlenstoffgehalt von wenigstens 0,65 Gew.-% und einem Durchmesser von 0,12 bis 0, 25 mm umfassen, die in entgegengesetzten Richtungen um den Nylon- oder Polyesterfasercordfaden (1) gewickelt sind, um eine erste und zweite Lage zu bilden, deren jede eine Wickelsteigung im Bereich von 0,4 bis 7 mm aufweist, wobei die zweite Lage (3) über der ersten Lage (2) liegt und eine Wickelsteigung aufweist, die 1,0 bis 5,0 mal gröber ist als diejenige der ersten Lage.

2. Zusammengesetzter Cordfaden nach Anspruch 1, bei dem der zentrale Cordfaden (1) ein Nylonfaden ist.

3. Zusammengesetzter Cordfaden nach Anspruch 1, bei dem der zentrale Cordfaden (1) ein Polyesterfaden ist.

4. Zusammgengesetzter Cordfaden nach einem der Ansprüche 1 bis 3, bei dem die auf der Oberfläche des Stahlfeindrahtes (2) mit hohem Kohlenstoffgehalt aufgebrachte Messingschicht aus einer oder mehreren Legierungen auf Cu-Zn-Basis gebildet ist.

## Revendications

1. Cordon composite pour le renforcement du caoutchouc, comprenant un cordon (1) central de fibres polyester ou nylon, soumis à un traitement au latex résorcinol formaldehyde, autour duquel sont enroulés une pluralité de filaments (2, 3) métalliques, caractérisé en ce que les filaments métalliques comprenent au moins deux fils d'acier plaqués au laiton ayant une teneur en carbone d'au moins 0,65% en poids et un diamètre de 0,12 à 0,25 mm, enroulés en direction opposée autour du cordon (1) de fibres polyester ou nylon pour former une première et une seconde couches chacune avec un pas d'enroulement de l'ordre de 0,4 à 7 mm, la seconde couche (3) recouvrant la première (2) et ayant un pas d'enroulement de 1 à 0,5 fois celui de la première couche.

2. Cordon composite selon la revendication 1, dans lequel le cordon (1) central est un cordon de nylon.

3. Cordon composite selon la revendication 1, dans lequel le cordon (1) central est un cordon polyester.

4. Cordon composite selon une quelconque des revendications 1 à 3, dans lequel la couche de laiton plaquée sur la surface du fil (2) fin d'acier à haute teneur en carbone est formée d'un ou plusieurs alliages à base de Cu-Zn.
